# FASCICULE DE BREVET EUROPEEN

(11) **EP 3 637 014 B1**
(45) Date de publication et mention de la délivrance du brevet: **05.04.2023**
(21) Numéro de dépôt: 19201102.1
(22) Date de dépôt: 02.10.2019
(51) Int. Cl.: F24H 9/13, F24H 1/52, F24H 9/06, F24D 3/18, F24D 17/00, F24D 17/02, F24D 19/10, F28D 7/10, F28D 7/14, F24H 4/04, F24D 3/08

(54) **DISPOSITIF COMBINE DE CHAUFFAGE DE L'EAU SANITAIRE ET DE L'EAU DE CHAUFFAGE D'UN LOCAL AVEC ECHANGEUR DE CHALEUR TROIS FLUIDES**
KOMBIHEIZGERÄRT ZUM ERHITZEN VON BRAUCHWASSER UND HEIZWASSER EINES RAUMS MIT DREI-WEGE-WÄRMETAUSCHER
COMBINED DEVICE FOR HEATING OF DOMESTIC WATER AND WATER FOR HEATING A ROOM WITH THREE-FLUID HEAT EXCHANGER

(30) Priorité: 08.10.2018 FR 1859290
(43) Date de publication de la demande: 15.04.2020
(73) Titulaire: Société Industrielle de Chauffage (SIC), 59660 Merville (FR)
(72) Inventeur: CLEMENT, Jean-Francis, 85000 La Roche-sur-Yon (FR); FONTBONNE, Erwan, 69670 Vaugneray (FR); SAISSET, Luc, 38460 Villemoirieu (FR)
(74) Mandataire: Ipsilon

(56) Documents cités:
- FR-A1- 2 725 011
- JP-A- H01 256 754
- JP-A- 2009 250 481
- JP-A- 2014 214 998

## Description

L'invention concerne un dispositif combiné de chauffage de l'eau sanitaire et de l'eau de chauffage d'un local. En particulier, l'invention concerne un dispositif combiné de chauffage de l'eau sanitaire et de l'eau de chauffage d'un local comprenant un échangeur de chaleur trois fluides. L'invention concerne également un système de chauffage de l'eau sanitaire et de l'eau de chauffage d'un local comprenant un tel dispositif combiné. Le document JP2009250481A divulgue un dispositif combiné ayant les caractéristiques du préambule de la revendication 1.

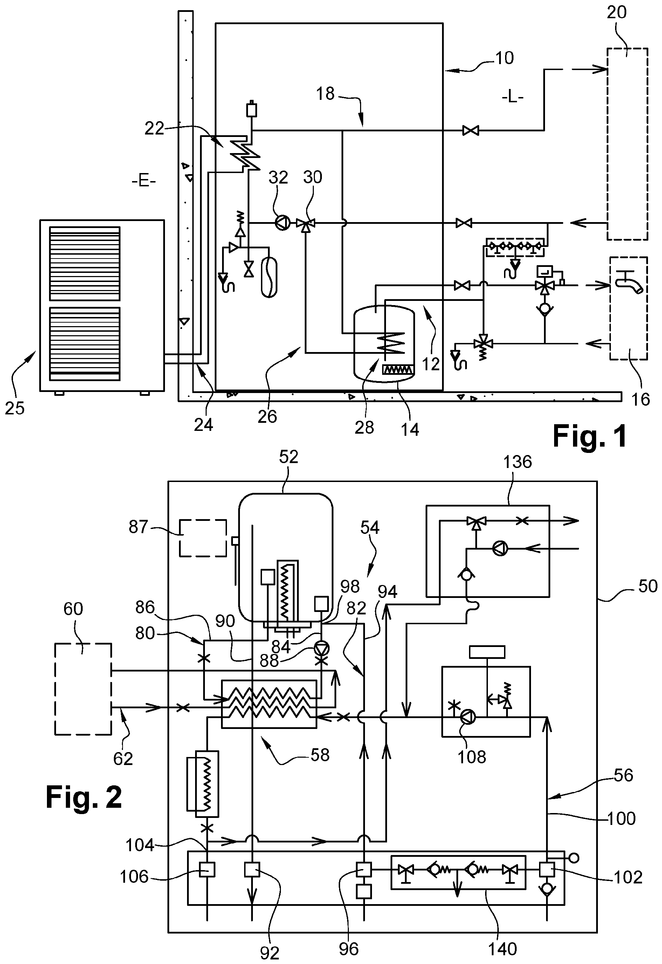

Il est connu de combiner dans un même dispositif le chauffage de l'eau sanitaire et de l'eau de chauffage d'un local au moyen d'une pompe à chaleur. Ce type de dispositif est appelé « pompe à chaleur double service » car le chauffage de l'eau sanitaire ainsi que de l'eau de chauffage est réalisé via une seule pompe à chaleur comprenant un module destiné à être disposé à l'extérieur du local. Un exemple d'installation d'un tel dispositif combiné 10 est par exemple visible sur la figure 1.

Le dispositif combiné 10 comprend un circuit d'eau de chauffage 18 raccordé à des organes de chauffage 20 d'un local L, tels que des radiateurs. Le dispositif combiné 10 comprend également un premier échangeur de chaleur 22 apte à échanger de la chaleur entre un circuit de fluide caloporteur 24 et le circuit d'eau de chauffage 18. En particulier, le circuit de fluide caloporteur 24 échange de la chaleur entre un milieu extérieur E au local L et le circuit d'eau de chauffage 18 présent à l'intérieur du local L. Pour ce faire, une unité extérieure 25 est disposée au niveau du milieu extérieur E et configuré pour échanger de la chaleur avec le circuit de fluide caloporteur 24. L'unité extérieure 25, le circuit de fluide caloporteur 24 et le premier échangeur 22 de chaleur forment une pompe à chaleur apte à réchauffer l'eau de chauffage présente dans le circuit d'eau de chauffage 18.

Pour permettre l'apport en eau chaude sanitaire dans le local L, le dispositif combiné 10 comprend également un ballon de stockage d'eau sanitaire 14 et un circuit d'eau sanitaire 12 en communication de fluide avec le ballon de stockage 14. Le circuit d'eau sanitaire 12 est raccordé à des organes de distribution d'eau sanitaire 16, tels que des robinets.

Le dispositif combiné 10 comprend en outre un circuit de chauffage de l'eau sanitaire 26 raccordé au circuit d'eau chauffage 18 sous forme de dérivation. Ainsi, c'est l'eau de chauffage du circuit d'eau de chauffage 18 qui circule dans le circuit de chauffage de l'eau sanitaire 26. Ce circuit de chauffage de l'eau sanitaire 26 comprend un deuxième échangeur de chaleur 28 disposé à l'intérieur du ballon de stockage 14 pour échanger de la chaleur avec l'eau sanitaire présente dans le ballon de stockage 14. Ce deuxième échangeur de chaleur 28 est un échangeur à serpentin s'étendant à l'intérieur du ballon de stockage 14 sous la forme d'un enroulement hélicoïdal. En particulier, le circuit de chauffage de l'eau sanitaire 26 comprend une portion de circuit commune avec le circuit d'eau de chauffage 18. Le circuit de chauffage de l'eau sanitaire 26 est ainsi en communication de fluide avec les premier 22 et deuxième 28 échangeurs de chaleur.

Dans le type de dispositif combiné 10 tel que décrit ci-dessus, l'eau sanitaire est donc chauffée via deux échangeurs de chaleur séparés par le circuit de chauffage de l'eau sanitaire 26. La configuration de ce type de dispositif combiné 10 permet de réchauffer l'eau de chauffage de manière directe via le premier échangeur 22. Une vanne trois voies 30 disposée à une jonction entre le circuit de chauffage de l'eau sanitaire 26 et le circuit d'eau de chauffage 18 permet de dériver sélectivement l'eau de chauffage à l'intérieur du circuit de chauffage de l'eau chaude sanitaire 26 pour chauffer l'eau sanitaire présente dans le ballon de stockage 14. Ainsi, la configuration de ce type de dispositif combiné 10 permet de chauffer l'eau sanitaire de manière indirecte par le biais de l'eau de chauffage.

Cette configuration indirecte du chauffage de l'eau sanitaire implique un fonctionnement sélectif ou alterné entre le chauffage de l'eau sanitaire et le chauffage de l'eau de chauffage. En effet, sous l'action de la vanne trois voies 30 et d'un circulateur 32, l'eau de chauffage circule soit à l'intérieur du circuit d'eau de chauffage 18 entre le premier échangeur de chaleur 22 et les organes de chauffage 20 soit à l'intérieur du circuit de chauffage de l'eau sanitaire 26 entre le premier 22 et le deuxième 28 échangeurs de chaleur. En d'autres termes, le dispositif combiné 10 ne peut chauffer que l'eau de chauffage destinée aux organes de chauffage 20 ou l'eau sanitaire. Ainsi, le dispositif combiné 10 ne peut respecter efficacement la consigne de température provenant des organes de chauffage 20 lors du chauffage de l'eau sanitaire.

L'architecture du dispositif combiné 10 implique la réalisation occasionnelle de phases rapides de chauffage de l'eau sanitaire pour satisfaire le besoin des utilisateurs. Ces phases rapides de chauffage de l'eau sanitaire impliquent une chute importante de performance énergétique du chauffage de l'eau sanitaire de sorte que ce fonctionnement sélectif ou alterné n'est pas suffisamment optimisé pour le chauffage de l'eau sanitaire.

Pour avoir une bonne performance lors d'une chauffe de l'eau sanitaire, il faut attendre que le ballon soit le plus froid possible, de préférence que l'ensemble du serpentin du deuxième échangeur de chaleur 28 baigne dans l'eau froide, pour démarrer la chauffe avec la température de condensation la plus basse possible. Plus la température de condensation d'une pompe à chaleur est basse et plus la performance est élevée. En pratique, il a été observé sur ce type de dispositif combiné 10 que ce mode de fonctionnement avec performances optimales est très peu utilisé car le confort de l'utilisateur est prioritaire sur la performance.

De plus, pour maximiser les performances de la chauffe de l'eau sanitaire, il faut éviter qu'un soutirage d'eau sanitaire par les organes de distribution 16 survienne lors d'une chauffe car l'eau froide qui va arriver en partie basse du ballon de stockage 14 rallonge le temps de chauffe sans pour autant faire descendre la température de condensation à l'intérieur du ballon de stockage 14. En effet, le serpentin reste majoritairement baigné dans l'eau en cours de chauffe. La performance moyenne sera donc directement dégradée. Cette constatation incite donc à effectuer des chauffes plutôt rapides. Toutefois, comme évoqué plus haut, une chauffe plus rapide de l'eau sanitaire entraîne une puissance échangée plus importante. Or, ceci a pour effet de dégrader la qualité de l'échange de chaleur, et donc sa performance, car la surface d'échange est constante.

La période hivernale où la demande en eau de chauffage est importante et souvent continue est donc une période où les performances du dispositif combiné 10 sont particulièrement dégradées. Les difficultés sont similaires lorsqu'une demande en eau de chauffage est réalisée alors qu'une chauffe de l'eau sanitaire est en cours.

De plus, cette configuration du dispositif combiné 10 a des inconvénients en termes de compacité. En effet, les premier 22 et deuxième 28 échangeurs de chaleur sont logés à l'intérieur du dispositif combiné 10 ce qui rend le volume de son enveloppe extérieure important. De plus, la présence du deuxième échangeur de chaleur 28 à l'intérieur du ballon de stockage 14 diminue le volume intérieur disponible. Ceci impose un surdimensionnement du ballon de stockage 14 pour un volume d'eau sanitaire maximum souhaité à l'intérieur du ballon de stockage 14. Ainsi, le ballon de stockage 14 est donc dimensionné avec un volume intérieur plus important par rapport à un ballon de stockage 14 sans échangeur de chaleur en son sein ayant une même volume intérieur disponible de stockage d'eau sanitaire. Le nombre et le volume de ces composants entraînent aussi une augmentation de la masse du dispositif combiné 10.

Cet encombrement important du dispositif combiné 10 ainsi que sa masse importante, dû notamment au surdimensionnement du ballon de stockage 14, nécessitent une installation du dispositif combiné 10 sur le sol. En effet, il a été observé que pour des raisons de reprise d'efforts et de simplicité de mise en place, il n'est pas envisageable de suspendre le dispositif combiné 10 au-dessus du sol comme peut l'être une chaudière murale. En effet, le dispositif combiné 10 pèse environ 140kg lorsqu'il est vide d'eau et environ 350kg lorsqu'il est rempli d'eau. De plus, le dispositif combiné 10 mesure environ 1.80m de hauteur ce qui limite son positionnement. Le dispositif combiné 10 est dit « sur socle » lorsqu'il est configuré pour être disposé sur le sol, i.e. non suspendu à un support au-dessus du sol.

Il existe donc un besoin pour un dispositif combiné de chauffage de l'eau sanitaire et de l'eau de chauffage d'un local ayant un fonctionnement optimisé et une configuration permettant de faciliter son installation dans un local.

Pour cela, l'invention propose un dispositif combiné de chauffage de l'eau sanitaire et de l'eau de chauffage d'un local selon la revendication 1. Ledit dispositif comprend :
- un ballon de stockage d'eau sanitaire,
- un circuit d'eau sanitaire en communication de fluide avec le ballon de stockage,
- un circuit d'eau de chauffage,
- un échangeur de chaleur d'une pompe à chaleur dans lequel un fluide caloporteur est apte à circuler, l'échangeur étant configuré pour effectuer un échange de chaleur :
   - entre le fluide caloporteur et de l'eau sanitaire présente dans le circuit d'eau sanitaire, et
   - entre le fluide caloporteur et de l'eau de chauffage présente dans le circuit d'eau de chauffage,

l'échangeur de chaleur comportant trois conduites imbriquées les unes à l'intérieur des autres pour définir trois zones d'écoulement de fluide,
lesdites trois conduites comprenant une première, une deuxième et une troisième conduites formant :
   - une première zone d'écoulement à l'intérieur de la première conduite,
   - une deuxième zone d'écoulement de section annulaire disposée entre la première conduite et la deuxième conduite, et
   - une troisième zone d'écoulement de section annulaire disposée entre la deuxième conduite et la troisième conduite,
      dans lequel la deuxième zone d'écoulement est configurée pour transporter le fluide caloporteur et chacune des première et troisième zones d'écoulement est configurée pour transporter l'un parmi l'eau chaude sanitaire et l'eau de chauffage,
la paroi de la conduite séparant l'eau sanitaire du fluide caloporteur étant une double paroi.

L'utilisation d'un même échangeur capable de réaliser un échange de chaleur entre le fluide caloporteur et l'eau de chauffage, d'une part, et l'eau sanitaire, d'autre part, permet une chauffe simultanée de celles-ci. Il n'est donc pas nécessaire de stopper la chauffe de l'eau sanitaire pour satisfaire une demande ponctuelle de l'un des organes de chauffage.

Du point de vue du confort de l'utilisateur, le dispositif combiné selon l'invention permet donc de maintenir le chauffage à l'intérieur d'un local tout en ayant la possibilité de produire de l'eau chaude sanitaire.

Du point de vue des performances énergétiques, la possibilité de chauffe simultanée permet d'éviter des phases de chauffe rapides de l'eau sanitaire et donc d'éviter les périodes de dégradation de la performance du dispositif combiné. Il a été observé que les performances du chauffage de l'eau sanitaire sont augmentées de plus de 30% par rapport à un dispositif combiné tel que décrit en figure 1 ayant un fonctionnement sélectif ou alterné.

De plus, la possibilité de n'utiliser qu'un seul échangeur de chaleur pour l'échange de chaleur avec le circuit d'eau de chauffage et le circuit d'eau sanitaire permet de diminuer le coût du dispositif combiné et son encombrement. Ceci permet d'envisager une installation différente du dispositif combiné, notamment de pouvoir le suspendre au-dessus du sol.

Selon un mode de réalisation du dispositif combiné, l'échangeur de chaleur est disposé en dehors du ballon de stockage d'eau sanitaire.

Selon un mode de réalisation du dispositif combiné, les trois conduites de l'échangeur de chaleur sont concentriques.

Selon un mode de réalisation du dispositif combiné, chacune des trois conduites s'étend le long d'une trajectoire hélicoïdale commune aux trois conduites.

Selon un mode de réalisation du dispositif combiné, une cavité de fuite est formée à l'intérieur de la double paroi, la cavité de fuite étant en communication de fluide avec l'extérieur de l'échangeur de chaleur pour permettre à un fluide de s'échapper hors de l'échangeur de chaleur en cas d'endommagement de l'une des parois de la double paroi.

Selon un mode de réalisation du dispositif combiné, la cavité de fuite comprend une pluralité de canaux s'étendant le long des trois conduites.

Selon un mode de réalisation du dispositif combiné, la première conduite comporte une surface interne lisse.

Selon un mode de réalisation du dispositif combiné, le circuit d'eau sanitaire comprend :
- un premier circuit d'eau sanitaire comprenant une première conduite de départ reliant le ballon de stockage à une entrée d'eau sanitaire de l'échangeur de chaleur et une première conduite de retour reliant une sortie d'eau sanitaire de l'échangeur de chaleur au ballon de stockage,
- un deuxième circuit d'eau sanitaire comprenant une deuxième conduite de départ reliant le ballon de stockage à un raccord de départ d'eau sanitaire configuré pour être raccordé à une installation d'eau sanitaire et une deuxième conduite de retour reliée à un raccord de retour d'eau sanitaire configuré pour être raccordé à une installation d'eau sanitaire.

Selon un mode de réalisation du dispositif combiné, la deuxième conduite de retour est raccordée à la première conduite de départ au moyen d'un raccord en Té.

Selon un mode de réalisation du dispositif combiné, celui-ci comprend en outre une platine de raccordement du circuit d'eau de chauffage à une installation d'eau de chauffage du local et du circuit d'eau sanitaire à une installation d'eau sanitaire du local.

Selon un mode de réalisation du dispositif combiné, les raccords de départ et de retour d'eau sanitaire sont montés sur la platine de raccordement, le dispositif combiné comportant en outre au moins un raccord de départ et au moins un raccord de retour d'eau de chauffage montés sur la platine de raccordement pour relier le circuit d'eau de chauffage à ladite installation d'eau de chauffage du local.

Selon un mode de réalisation du dispositif combiné, celui-ci comprend une pluralité de raccord de départ d'eau de chauffage et une pluralité de raccord de retour d'eau de chauffage reliés au circuit d'eau de chauffage pour permettre le raccordement de plusieurs installations d'eau de chauffage.

Selon un mode de réalisation du dispositif combiné, celui-ci comprend également un raccord de sécurité configuré pour relier le circuit d'eau sanitaire à un groupe de sécurité permettant de réguler la pression à l'intérieur du ballon de stockage, le groupe de sécurité étant disposé sous le ballon de stockage.

Selon un mode de réalisation du dispositif combiné, celui-ci comprend en outre des moyens de fixation du dispositif combiné à un support configurés pour suspendre le dispositif combiné au-dessus du sol.

Selon un mode de réalisation du dispositif combiné, l'échangeur de chaleur est disposé au-dessous du ballon de stockage ou s'étend autour du ballon de stockage.

L'invention concerne également un système de chauffage de l'eau sanitaire et de l'eau de chauffage d'un local, comprenant :
- un dispositif combiné tel que décrit ci-dessus,
- au moins une installation d'eau sanitaire comportant au moins un point de puisage et au moins une installation d'eau de chauffage comprenant au moins un système d'émission de chaleur pour chauffer le local, reliées respectivement au circuit d'eau sanitaire et au circuit d'eau de chauffage du dispositif combiné.

D'autres caractéristiques et avantages de l'invention apparaîtront à la lecture de la description qui suit de modes de réalisation préférés de l'invention, donnée à titre d'exemple et en référence au dessin annexé.
La figure 1 représente un schéma hydraulique d'un dispositif combiné de chauffage de l'eau sanitaire et de l'eau de chauffage d'un local connu de l'art antérieur.
La figure 2 représente un schéma hydraulique d'un mode de réalisation d'un dispositif combiné de chauffage de l'eau sanitaire et de l'eau de chauffage d'un local.
La figure 3 représente une vue en coupe transversale partielle d'un échangeur de chaleur du dispositif combiné selon la figure 2.
Les figures 4 et 5 représentent respectivement une vue en perspective et une vue en coupe partielle de l'échangeur de chaleur du dispositif combiné selon la figure 2.
Les figures 6 et 7 représentent respectivement une première et une deuxième configurations de mise en place de l'échangeur de chaleur du dispositif combiné selon la figure 2, l'échangeur de chaleur étant disposé sous le ballon de stockage dans la première configuration et autour du ballon de stockage dans la deuxième configuration.
La figure 8 représente schématiquement une vue éclatée du dispositif combiné de la figure 2 dans une configuration modulaire.
Les figures 9 et 10 représentent schématiquement une vue détaillée de la partie inférieure du dispositif combiné avec et sans platine de raccordement, respectivement.
La figure 11 représente schématiquement une vue en perspective de la platine de raccordement selon la figure 9.
La figure 12 représente schématiquement une vue détaillée de la partie inférieure du dispositif combiné comprenant un kit de chauffage multizone.
La figure 13 représente schématiquement un mode de réalisation d'une conduite à double paroi séparant une zone d'écoulement d'eau sanitaire et une zone d'écoulement de fluide caloporteur.

Il est proposé un dispositif combiné de chauffage de l'eau sanitaire et de l'eau de chauffage d'un local. Un mode de réalisation d'un tel dispositif combiné est représenté en figure 2. Ce mode de réalisation doit être considéré comme un exemple du dispositif combiné et non comme la seule configuration possible pour le dispositif combiné.

Selon la figure 2, un dispositif combiné 50 comprend un ballon de stockage 52 d'eau sanitaire et un circuit d'eau sanitaire 54 en communication de fluide avec le ballon de stockage 52. Le circuit d'eau sanitaire 54 est destiné à être raccordé à au moins un organe de distribution d'eau sanitaire (non représenté). Le dispositif combiné 50 comprend également un circuit d'eau de chauffage 56 destiné à être raccordé à au moins un organe de chauffage du local (non représenté).

Pour le chauffage de l'eau de chauffage et de l'eau sanitaire, le dispositif combiné 50 comprend également un échangeur de chaleur 58 dans lequel un fluide caloporteur est apte à circuler via un circuit de fluide caloporteur 62. Le dispositif combiné 50 est de préférence couplé à une unité extérieure 60 disposée à l'extérieur du local. L'échangeur de chaleur 58, le circuit de fluide caloporteur 62 et l'unité extérieure 60 forment une pompe à chaleur. L'échangeur de chaleur 58 est configuré pour effectuer un échange de chaleur entre le fluide caloporteur et de l'eau sanitaire présente dans le circuit d'eau sanitaire, et entre le fluide caloporteur et de l'eau de chauffage présente dans le circuit d'eau de chauffage. En d'autres termes, l'échangeur de chaleur 58 est configuré pour recevoir trois fluides et transmettre de la chaleur à deux de ces fluides via le fluide caloporteur. L'échangeur de chaleur 58 correspond ainsi à un échangeur de chaleur à trois voies ce qui permet de réaliser un échange de chaleur direct entre le fluide caloporteur et l'eau de chauffage, mais également un échange de chaleur direct entre le fluide caloporteur et l'eau sanitaire.

De plus, les circuits de chauffage de l'eau sanitaire et de chauffage de l'eau de chauffage sont agencés de manière distincte pour permettre la dissociation entre le chauffage de l'eau sanitaire et le chauffage de l'eau de chauffage. Le circuit de chauffage de l'eau sanitaire correspond à une portion du circuit d'eau sanitaire 54 mettant en communication de fluide le ballon de stockage 52 avec l'échangeur de chaleur 58. Le circuit de chauffage de l'eau de chauffage est confondu avec le circuit d'eau de chauffage 56. De préférence, les circuits de chauffage de l'eau sanitaire et de chauffage de l'eau de chauffage ne comprennent aucune portion de conduite commune. Cet agencement de chauffage distinct permet au dispositif combiné 50 d'avoir une boucle dédiée au chauffage de l'eau sanitaire. Ainsi, il est possible de réaliser une chauffe simultanée de l'eau de chauffage et de l'eau sanitaire. Les stratégies de chauffage de l'eau sanitaire sont ainsi plus flexibles. Une optimisation plus importante peut donc être réalisée. Ceci est particulièrement avantageux sur le plan du confort de l'utilisateur et de la consommation énergétique en comparaison au dispositif combiné 10 de l'art antérieur représenté en figure 1.

De plus, cette configuration indépendante des circuits de chauffage de l'eau permet d'utiliser l'eau sanitaire du circuit de chauffage de l'eau sanitaire pour le dégivrage de l'unité extérieur 60. En effet, lorsqu'il fait froid et humide, l'unité extérieur 60 de la pompe à chaleur peut prendre en glace. Ceci est phénomène normal et prévu dans le fonctionnement de l'unité extérieure 60. Pour dégivrer cette unité extérieure 60, il est généralement prévu d'inverser le fonctionnement de la pompe à chaleur, i.e. la pompe à chaleur prélève de la chaleur à l'intérieur du local pour réchauffer l'unité extérieure 60. Ce phénomène relativement court, généralement inférieur à 15min, peut engendrer un inconfort côté utilisateur, d'une part, et peut également entraîner dans certaines conditions un risque de prise en glace du circuit d'eau de chauffage 56 au niveau de son interface avec le fluide caloporteur. Cette interface se situe au niveau de l'échangeur de chaleur 58 dans le mode de réalisation de la figure 2. Ce phénomène peut ainsi endommager la pompe à chaleur. Grâce à cette configuration indépendante, le circuit de chauffage de l'eau sanitaire peut à tout moment être utilisé pour terminer ou réaliser entièrement une opération de dégivrage en échangeant de la chaleur avec le fluide caloporteur. En effet, le volume d'eau sanitaire présent dans le circuit d'eau sanitaire 54, même lorsqu'il est à une température basse renferme assez d'énergie pour dégivrer l'unité extérieure 60.

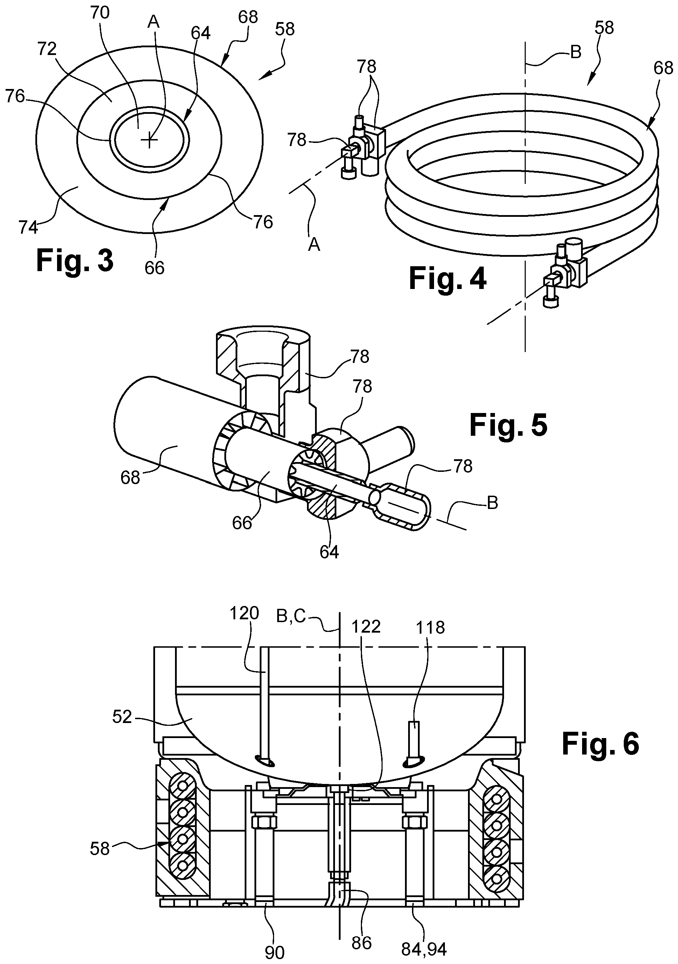

Tel que représenté en figure 3, l'échangeur de chaleur 58 comporte selon l'invention trois conduites imbriquées les unes à l'intérieur des autres pour définir trois zones d'écoulement de fluide. On entend par « imbriquées » le fait qu'une première zone d'écoulement 70 est disposée à l'intérieur d'une deuxième zone d'écoulement 72 qui est elle-même disposée à l'intérieur d'une troisième zone d'écoulement 74. Lesdites trois conduites comprennent une première 64, une deuxième 66 et une troisième 68 conduites formant la première 70, la deuxième 72 et la troisième 74 zones d'écoulement de fluide. De préférence, les première 70, deuxième 72 et troisième 74 zones d'écoulement ont une section circulaire s'étendant autour d'une trajectoire ou d'un profil A. Les deuxième 72 et troisième 74 zones d'écoulement sont annulaires. De préférence encore, les première 64, deuxième 66 et troisième 68 conduites sont concentriques de manière à obtenir trois zones d'écoulement uniformément réparties autour de la trajectoire A.

Une paroi d'échange 76 de chaleur est disposée entre la première 70 et la deuxième 72 zones d'échange ainsi qu'entre la deuxième 72 et la troisième 74 zones d'échange. Ces parois d'échanges 76 correspondent aux parois des première 64 et deuxième 66 conduites. Ces parois d'échange 76 permettent la transmission de la chaleur entre les deux fluides présents de part et d'autre de la paroi déchange 76.

Selon l'invention, dans l'échangeur de chaleur 58, la première zone d'écoulement 70 est formée à l'intérieur de la première conduite 64. La deuxième zone d'écoulement 72 est formée entre les première 64 et deuxième 66 conduites. La troisième zone d'écoulement 74 est formée entre les deuxième 66 et troisième 68 conduites.

Selon l'invention, la deuxième zone d'écoulement 72 est configurée pour transporter le fluide caloporteur du circuit de fluide caloporteur 62. De plus, chacune des première 70 et troisième 74 zones d'écoulement est configurée pour transporter l'un parmi l'eau sanitaire et l'eau de chauffage. Pour des questions règlementaires, la conduite séparant la deuxième zone d'écoulement 72 de la zone d'écoulement transportant l'eau sanitaire comporte une double paroi. Ainsi, l'eau sanitaire est davantage protégée d'une éventuelle contamination. De manière préférée, la première zone d'écoulement 70 est configurée pour transporter l'eau sanitaire.

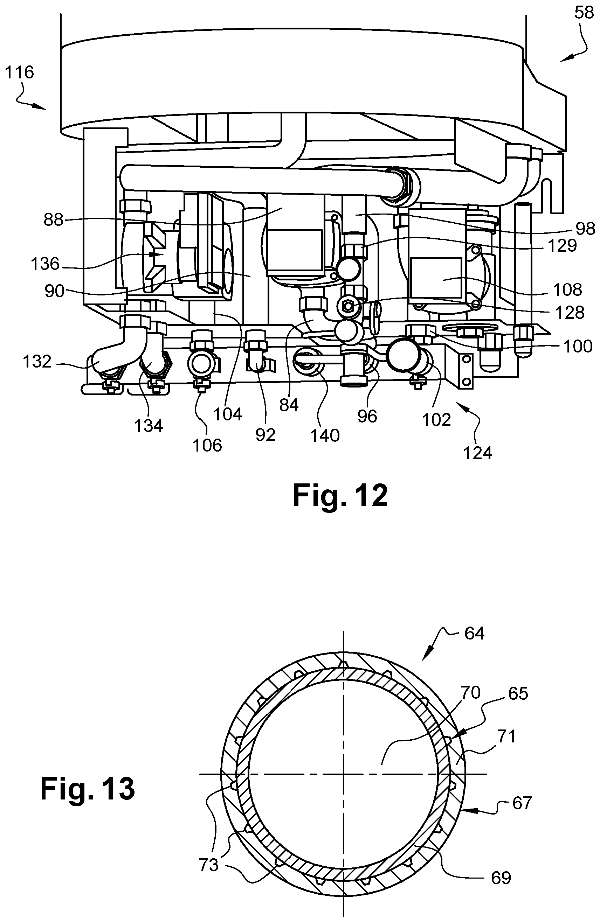

En référence à la figure 13, selon l'invention, la paroi (67) de la conduite séparant l'eau sanitaire du fluide caloporteur est une double paroi. Ainsi, une cavité de fuite 65 peut être formée à l'intérieur de la double paroi 67 disposée entre la deuxième zone d'écoulement 72 de la zone d'écoulement transportant l'eau sanitaire. Pour des raisons de clarté la figure 13 représente la double paroi 67 formée par la première conduite 64. De manière alternative, la double paroi 67 peut être réalisée par la deuxième conduite 66 si l'eau sanitaire s'écoule à l'intérieur de la troisième zone d'écoulement 74.

Cette cavité de fuite 65 est en communication de fluide avec l'extérieur de l'échangeur de chaleur 58 pour permettre à un fluide de s'échapper hors de l'échangeur de chaleur 58 en cas d'endommagement de l'une des parois de la double paroi 67. Les fluides à l'intérieur de l'échangeur de chaleur 58 sont à une pression supérieure à la pression atmosphérique extérieure ce qui entraîne une sortie très rapide du fluide vers l'extérieur lors d'une fuite. La cavité de fuite 65 permet ainsi de détecter cet endommagement avant qu'une contamination de l'eau sanitaire n'ait lieu. Un dispositif de détection de fuite peut être ajouté au niveau de l'extrémité de la cavité de fuite 65 pour permettre l'envoi d'un signal de dysfonctionnement ou d'un signal d'arrêt du dispositif combiné. Une détection rapide de l'endommagement de l'une des parois de la double paroi 67 est particulièrement importante pour des raisons de sécurité, notamment en lien avec la réglementation de certains pays. A titre d'exemple, la norme EN 12897 prévoit que la fuite créée par un trou de 2mm dans l'une des parois de la double paroi 67 doit pouvoir être détectée sous 300 secondes.

La double paroi 67 est de préférence formée par une paroi interne 69 et paroi externe 71 insérées l'une à l'intérieur de l'autre. La cavité de fuite 65 est disposée entre les parois interne 69 et externe 71. La cavité de fuite 65 peut comprendre une pluralité de canaux 73 s'étendant le long des première 64, deuxième 66 et troisième 68 conduites. Les canaux 73 peuvent être formés par des rainures ou des nervures aménagées sur la surface des parois interne 69 et/ou externe 71. Les canaux 73 sont de préférence parallèles à une ligne moyenne le long de laquelle la première conduite 64 s'étend. De manière alternative, les canaux 73 peuvent s'étendre localement suivant une direction transversale à cette ligne moyenne, par exemple avec une trajectoire hélicoïdale se développant autour de la ligne moyenne. Selon un mode de réalisation préféré, les canaux 73 sont espacés autour de la ligne moyenne d'une distance inférieure ou égale à 2mm.

La conduite dans laquelle circule l'eau sanitaire, ici la première conduite 64, est particulièrement sujette à l'entartrage ce qui peut à terme réduire les performances de l'installation et l'endommager. Il a été observé que la réduction des obstacles ou des relielfs à l'intérieur de la conduite permet d'empêcher de manière significative le dépôt de tartre à l'intérieur de la conduite. Ainsi, la surface interne de la première conduite 64 est de préférence lisse. On entend par « lisse », une surface interne dépourvue de rainures, de corrugations ou d'élément rapporté à l'intérieur de la première conduite 64 qui formerait un obstacle au flux d'eau sanitaire et possédant une rugosité la plus faible possible. La surface interne de la première conduite 64 a de préférence une rugosité égale ou inférieure à 0,010mm. De manière combinée ou alternative, la première conduite 64 peut être réalisée en cuivre ou en alliage de cuivre pour limiter le dépôt de tartre, le cuivre étant un matériau possédant une rugosité naturelle plus faible que les autres matériaux pouvant être utilisés dans cette application. Selon un mode de réalisation préféré, cette première conduite 64 comprend un tube en cuivre dont la surface interne est lisse de manière à être très robuste vis-à-vis de l'entartrage. Lorsque la première conduite 64 comprend les parois interne 69 et externe 71, la surface interne de la paroi interne 69 est de préférence lisse et/ou comporte du cuivre.

Pour optimiser le positionnement et l'encombrement de l'échangeur de chaleur 58, la trajectoire ou profil A est de préférence hélicoïdale, telle que représentée sur la figure 4. En d'autres termes, les première 64, deuxième 66 et troisième 68 conduites s'étendent de préférence autour d'elles-mêmes le long d'un axe longitudinal B. En d'autres termes encore, les première 64, deuxième 66 et troisième 68 conduites s'étendent de préférence le long d'une trajectoire hélicoïdale A commune aux trois conduites.

Telles qu'illustrées à la figure 5, les première 70, deuxième 72 et troisième 74 zones d'écoulement sont de préférence raccordées au circuit de fluide caloporteur 62, au circuit d'eau de chauffage 56 et au circuit d'eau sanitaire 54 via des raccords d'échangeur 78 disposés au niveau des extrémités des première 64, deuxième 66 et troisième 68 conduites.

Tel que visible sur la figure 2, l'échangeur de chaleur 58 est de préférence disposé en dehors du ballon de stockage d'eau sanitaire 52. Dans ce cas, le circuit d'eau sanitaire 54 comprend un premier circuit d'eau sanitaire 80 destiné à mettre le ballon de stockage 52 en communication de fluide avec l'échangeur de chaleur 58 et un deuxième circuit d'eau sanitaire 82 destiné à mettre le ballon de stockage 52 en communication de fluide avec les organes de distribution d'une installation d'eau sanitaire. Le premier circuit d'eau sanitaire 80 correspond à un circuit de chauffage de l'eau de sanitaire.

Le premier circuit d'eau sanitaire 80 comprend une première conduite de départ 84 reliant le ballon de stockage 52 à une entrée d'eau sanitaire de l'échangeur de chaleur 58 et une première conduite de retour 86 reliant une sortie d'eau sanitaire de l'échangeur de chaleur 58 au ballon de stockage 52. En particulier, la première conduite de départ 84 et la première conduite de retour 86 sont chacune raccordées à une extrémité de la première zone d'écoulement 70 de l'échangeur de chaleur 58 via les raccords d'échangeur 78. Pour la mise en circulation de l'eau sanitaire à l'intérieur du premier circuit d'eau sanitaire 80, ce dernier comprend également un premier circulateur 88. Le premier circuit d'eau sanitaire 80 forme un circuit de chauffage de l'eau sanitaire.

Le dispositif combiné 50 comprend en outre un contrôleur 87 configuré pour réguler la vitesse du premier circulateur 88 de manière à réguler le débit de l'eau sanitaire circulant dans le premier circuit d'eau sanitaire 80. Le contrôleur 87 est également configuré pour réguler le débit du fluide caloporteur. La régulation simultanée ou sélective du débit de circulation de l'eau sanitaire et du fluide caloporteur permet de réguler la température de l'eau sanitaire fournie au ballon de stockage 52. Le contrôleur 87 permet d'optimiser la performance pendant la chauffe ou de garantir la tenue dans le temps de l'échangeur (par exemple, en évitant le risque de prise en glace).

Le deuxième circuit d'eau sanitaire 82 comprend une deuxième conduite de départ 90 reliant le ballon de stockage 52 à un raccord de départ d'eau sanitaire 92. Cette deuxième conduite de départ 90 peut être autrement considérée comme une conduite de départ d'eau chaude hors du ballon vers une installation d'eau sanitaire (non représentée). Cette installation d'eau sanitaire comporte notamment les organes de distribution d'eau sanitaire mentionnés ci-avant. Le deuxième circuit d'eau sanitaire 82 comprend également une deuxième conduite de retour 94 reliée à un raccord de retour d'eau sanitaire 96. La deuxième conduite de retour 94 met en communication de fluide le ballon de stockage 52 avec ce raccord de retour d'eau sanitaire 96. Cette deuxième conduite de départ 90 peut être autrement considérée comme une conduite de retour d'eau froide provenant d'une source d'eau sanitaire de l'installation d'eau sanitaire. Cette eau froide correspond de préférence à l'eau fournie par le réseau de distribution d'eau courante de la localité. La température de cette eau est généralement comprise entre 5 à 25°C au niveau du dispositif combiné 50.

Pour limiter le nombre de raccordements du circuit d'eau sanitaire 54 avec le ballon de stockage 52, la deuxième conduite de retour 94 est raccordée à la première conduite de départ 84 au moyen d'un raccord en Té 98. En d'autres termes, la deuxième conduite de retour 94 est raccordée indirectement au ballon de stockage 52 via la première conduite de départ 84. On entend par « raccord en Té », une portion de conduite ayant trois orifices en communication de fluides les uns avec les autres. Ainsi, le raccord en Té 98 comprend un premier orifice en communication de fluide avec le ballon de stockage 52, un deuxième orifice en communication de fluide avec l'échangeur de chaleur 58 et un troisième orifice en communication de fluide avec la deuxième conduite de retour 94.

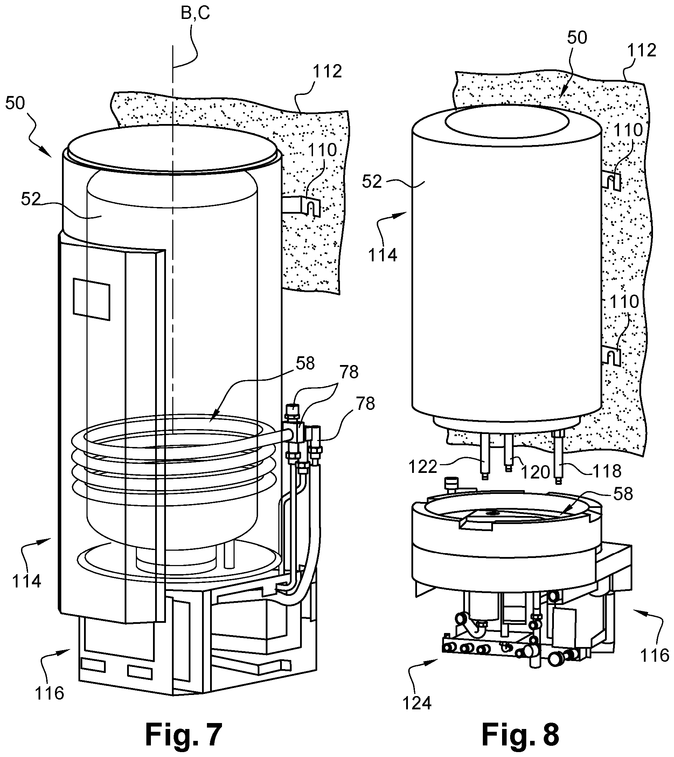

Lorsque le dispositif combiné 50 est configuré pour être suspendu au-dessus du sol, la deuxième conduite de départ 90, la première conduite de retour 86 et la portion de conduite entre le ballon de stockage 52 et le raccord en Té 98 sont raccordées au ballon de stockage 52 de préférence dans une partie inférieure du ballon de stockage 52. Une telle disposition est par exemple visible sur les figures 6 et 8. De manière alternative, lorsque le dispositif combiné 50 est configuré pour être posé sur le sol, la deuxième conduite de départ 90, la première conduite de retour 86 et la portion de conduite entre le ballon de stockage 52 et le raccord en Té 98 sont raccordées au ballon de stockage 52 de préférence dans une partie supérieure du ballon de stockage 52.

Le circuit d'eau de chauffage 56 comprend une conduite de retour d'eau de chauffage 100 reliant un raccord de retour d'eau de chauffage 102 à une entrée de l'échangeur de chaleur 58. Le circuit d'eau de chauffage 56 comprend également une conduite de départ d'eau de chauffage 104 reliant un raccord de départ d'eau de chauffage 106 à une sortie de l'échangeur de chaleur 58. En particulier, la conduite de retour d'eau de chauffage 100 et la conduite de départ d'eau de chauffage 104 sont chacune raccordées à une extrémité de la troisième zone d'écoulement 74 de l'échangeur de chaleur 58 via les raccords d'échangeur 78. Pour la mise en circulation de l'eau de chauffage à l'intérieur du circuit d'eau de chauffage 56 lorsque celui-ci est raccordé à une installation de chauffage du local, le circuit d'eau de chauffage 56 comprend également un deuxième circulateur 108.

Le contrôleur 87 est en outre configuré pour réguler la vitesse du deuxième circulateur 108 de manière à réguler le débit de l'eau de chauffage circulant dans le circuit d'eau de chauffage 56. La régulation simultanée ou sélective du débit de circulation de l'eau de chauffage et du fluide caloporteur permet de réguler la température de l'eau de chauffage et la puissance fournies à l'installation de chauffage.

Lors de la mise en service du dispositif combiné 50, l'installation d'eau sanitaire est reliée au dispositif combiné 50 par le biais des raccords de départ 92 et de retour 96 d'eau sanitaire. De manière similaire, l'installation de chauffage du local est reliée au dispositif combiné 50 par le biais des raccords de départ 106 et de retour 102 d'eau de chauffage.

Le ballon de stockage 52 est de préférence un ballon à canules. En d'autres termes, le ballon de stockage 52 est raccordé aux premier 80 et deuxième 82 circuits d'eau sanitaire par le biais de canules disposées à l'intérieur du ballon de stockage 52. L'utilisation de canules permet notamment de disposer les orifices d'entrée ou de sorties des premier 80 et deuxième 82 circuits d'eau sanitaire à des position prédéterminées à l'intérieur du ballon de stockage 52. Dans le cas d'un ballon à canules, le ballon de stockage 52 ne contient donc aucun échangeur de chaleur, notamment pas d'échangeur de chaleur de type serpentin. Le volume disponible à l'intérieur du ballon de stockage 52 est ainsi plus important que dans le cas d'un ballon à serpentin pour un même volume extérieur du ballon de stockage 52. En effet, le volume « mort » ou indisponible se trouvant à l'emplacement du serpentin et en-dessous de celui-ci n'est pas présent ici. Ainsi, le ballon de stockage 52 présente de préférence un volume intérieur inférieur ou égal à 150 dm3, de préférence inférieur ou égal à 100 dm3. En comparaison, le dispositif combiné 10 de l'art antérieur est généralement utilisé avec un ballon de stockage 12 ayant un volume intérieur, avant mise en place du serpentin, de 190 dm3. Ceci permet au dispositif combiné 52 d'être plus compact et d'avoir un prix de fabrication inférieur au dispositif combiné 10 de l'art antérieur.

De plus, une partie du gain de masse est lié au type d'échangeur en lui-même. En effet, un échangeur de chaleur à serpentin est beaucoup plus volumineux/lourd qu'un échangeur de chaleur externe au ballon de stockage 52. Avec un échangeur de chaleur de type serpentin, l'eau du ballon de stockage 52 est réchauffé par convection naturelle. Il faut donc un échangeur très grand pour avoir des performances acceptables. A contrario, l'eau est réchauffée par convection forcée avec un échangeur de chaleur externe ce qui augmente de manière importante la performance de l'échange.

Cette configuration comprenant un ballon de stockage 52 à canules permet au dispositif combiné 50 d'avoir une hauteur maximale le long d'un axe longitudinal d'extension C du ballon de stockage 52 inférieure ou égale à 150 cm, de préférence inférieure ou égale à 145 cm.

Tel que représenté sur la figure 6, le ballon de stockage 52 comprend une canule combinée 118, une canule d'aspiration 120 ainsi qu'une canule de refoulement 122 toutes débouchant à l'intérieur du ballon de stockage 52.

La canule combinée 118 est configurée pour être raccordée à la première conduite de départ 84. La deuxième conduite de retour 94 est raccordée à la première conduite de départ 84 au moyen d'un raccord en Té de sorte que le refoulement dans le ballon de stockage 52 de l'eau sanitaire provenant de la deuxième conduite de retour 94 est réalisé au travers de la canule combinée 118. La canule combinée 118 s'étend à l'intérieur du ballon de stockage 52 de sorte que son orifice d'extrémité débouche au niveau d'une partie inférieure du ballon de stockage 52. Ainsi, la canule combinée 118 est configurée pour fonctionner soit en aspiration soit en refoulement selon le mode de fonctionnement du circuit d'eau sanitaire 54. En effet, la canule d'aspiration 118 est configurée pour aspirer de l'eau froide en partie basse du ballon de stockage 52 lors d'une phase de chauffage de l'eau sanitaire, i.e. lorsqu'il y a circulation de l'eau sanitaire à l'intérieur du premier circuit d'eau sanitaire 80. A contrario, la canule d'aspiration 118 est configurée pour refouler de l'eau sanitaire à l'intérieur du ballon de stockage 52 lors d'un soutirage d'eau sanitaire via la deuxième canule d'aspiration 120, i.e. lorsqu'il y a circulation de l'eau sanitaire à l'intérieur du deuxième circuit d'eau sanitaire 82.

De plus, la canule combinée 118 comporte de préférence un brise-jet pour permettre l'aspiration ou le refoulement de l'eau sanitaire dans une direction transversale à l'axe longitudinal d'extension C du ballon de stockage 52. Le brise-jet peut être formé sur la canule combinée 118 en obstruant son extrémité distale et en formant un ou plusieurs orifices latéraux sur une paroi périphérique de la canule combinée 118. Ceci permet de réduire le brassage provoqué par le refoulement de l'eau sanitaire provenant de la deuxième conduite de retour 94 lorsque celui-ci est réalisé le long de l'axe longitudinal d'extension C du ballon de stockage 52. La canule de refoulement 122 comporte également de préférence un brise-jet au niveau de son extrémité distale, i.e. l'extrémité où l'eau est refoulée à l'intérieur du ballon de stockage 52.

De manière alternative, le dispositif combiné 50 peut être dépourvu de raccord en Té de sorte que chacune des première conduite de départ 84 et deuxième conduite de retour 94 débouchent distinctement à l'intérieur du ballon de stockage 52. Dans ce mode de réalisation alternatif, la canule combinée 118 fonctionne uniquement comme une canule d'aspiration et une canule supplémentaire de refoulement est disposée à l'extrémité de la deuxième conduite de retour 94.

La canule d'aspiration 120 est configurée pour être raccordée à la deuxième conduite de départ 90. La canule d'aspiration 120 s'étend à l'intérieur du ballon de stockage 52 de sorte que son orifice d'extrémité débouche au niveau d'une partie supérieure du ballon de stockage 52. Ainsi, la canule d'aspiration 122 est configurée pour aspirer de l'eau chaude en partie haute du ballon de stockage 52.

La canule de refoulement 122 est configurée pour être raccordée à la première conduite de retour 86. Pour obtenir un bon compromis entre performance et confort de l'utilisateur, l'extrémité distale de la canule de refoulement 122 est située à une position intermédiaire ou médiane de la hauteur de la cavité interne du ballon de stockage 52. En effet, un positionnement trop proche de la partie supérieure du ballon de stockage 52 entrainerait un brassage de cette partie supérieure. Ce brassage est néfaste car il ne permet pas de conserver une réserve d'eau chaude au cas où un puisage inopiné surviendrait. De plus, un positionnement trop proche de la partie inférieure du ballon de stockage 52, et donc de la canule combinée 118, entraînerait une baisse de performance.

En particulier, l'extrémité distale de la canule de refoulement 122 est située à une position distante de la paroi supérieure du ballon de stockage 52 d'au moins 20% de la hauteur de la cavité interne du ballon de stockage 52 et distante de la paroi inférieure du ballon de stockage 52 d'au moins 20% de la hauteur de la cavité interne du ballon de stockage 52. En d'autres termes, l'extrémité distale de la canule de refoulement 122 est située entre 20% et 80% de la hauteur de la cavité interne du ballon de stockage 52. De manière alternative, l'extrémité distale de la canule de refoulement 122 peut être située entre 30% et 70% de la hauteur de la cavité interne du ballon de stockage 52.

Pour obtenir un compromis optimum entre performance et confort de l'utilisateur, l'extrémité distale de la canule de refoulement 122 est de préférence située à environ 50% de la hauteur de la cavité interne du ballon de stockage 52.

Grâce au ballon de stockage 52 à canules l'eau sanitaire est prélevée en partie basse du ballon de stockage 52 pour être réchauffée dans l'échangeur de chaleur 58, i.e. la partie du ballon de stockage 52 où l'eau froide est refoulée par la deuxième conduite de retour 94. En conséquence, même si le ballon n'est pas entièrement froid, les performances ne seront pas pour autant dégradées. Ainsi, des chauffes performantes peuvent être réalisées sans pour autant risquer une situation d'inconfort pour l'utilisateur. Ceci est dû au fait que l'on peut, si besoin, alimenter le circuit d'eau de chauffage 56 sans pour autant couper le chauffage de l'eau sanitaire. On peut donc faire des chauffes optimisées sans être contraint par le circuit d'eau de chauffage 56. Si un soutirage par les organes de distribution survient lors de la chauffe de l'eau sanitaire, la température de l'eau sanitaire réduit immédiatement en entrée de l'échangeur de chaleur 58 ce qui réduit la température de condensation à l'intérieur du ballon de stockage 52. Le coefficient de performance de la pompe à chaleur est donc amélioré. En définitive, ce soutirage aura un impact très faible sur la performance moyenne de la chauffe de l'eau sanitaire. Les phases de chauffage de l'eau sanitaire peuvent ainsi être plus longues que dans le cas d'un ballon à serpentin pour une meilleure performance.

Tel qu'illustré sur la figure 8, le dispositif combiné 50 peut comporter des moyens de fixation 110 du dispositif combiné à un support 112 configurés pour suspendre le dispositif combiné 50 au-dessus du sol. On entend par « suspendre » le fait que le poids du dispositif combiné 50 est supporté par le support 112 en totalité. Le support 112 est de préférence un mur du local. Les dispositifs combinés connus sont généralement « sur socle », i.e. posés au sol, car leur masse ne permet pas d'envisager une suspension sur un support. Ici, la réduction de la masse du dispositif combiné 50 permet de considérer une solution suspendue au support 112 via les moyens de fixation 110. Une solution suspendue permet de réduire la surface prise au sol par le dispositif combiné 50 ce qui correspond à une attente actuelle des utilisateurs, notamment dans les constructions de logements neufs.

Les moyens de fixation comportent de préférence une structure d'interface entre le support 112 et des modules formés par le dispositif combiné 50. Cette structure d'interface est par exemple un cadre ou une échelle fixé(e) au mur ou au support 112 sur lequel ou laquelle le dispositif combiné 50 est suspendu. Cette structure interface permet la répartition des efforts sur le support 112 pour faciliter et pérenniser l'installation du dispositif combiné 50. En effet, un mur peut être non-porteur et donc peu adapté à supporter de fortes charges suspendues. A titre de référence, le dispositif combiné 50, une fois rempli d'eau, pèse plus de 200kg.

Selon une configuration préférée du dispositif combiné 50, l'échangeur de chaleur 58 est disposé au-dessous du ballon de stockage 52, tel qu'illustré sur la figure 6. Cette configuration permet de diminuer les dimensions transversales à l'axe longitudinal d'extension C du dispositif combiné 50 par rapport à une configuration où l'échangeur de chaleur 58 s'étend autour du ballon de stockage 52.

Les dimensions externes de l'échangeur de chaleur 58 sont de préférence inférieures ou égales aux dimensions externes du ballon de stockage 52. Ainsi, l'encombrement transversal du dispositif combiné 50 est sensiblement constant le long de l'axe longitudinal d'extension C. De manière alternative, les dimensions externes de l'échangeur de chaleur 58 peuvent être supérieures aux dimensions externes du ballon de stockage 52.

La figure 7 représente une configuration du dispositif combiné 50 dans lequel l'échangeur de chaleur 58 est disposé de manière à s'étendre autour du ballon de stockage 52.

Dans ces deux configurations de l'échangeur de chaleur 58, en-dessous ou autour du ballon de stockage 52, l'échangeur de chaleur 58 et le ballon de stockage 52 sont de préférence concentriques. En d'autres termes, l'axe longitudinal B de l'échangeur de chaleur 58 est confondu avec l'axe d'extension longitudinal C du ballon de stockage 52.

De plus, le dispositif combiné 50 comprend une platine de raccordement 124 du circuit d'eau de chauffage 56 à une installation d'eau de chauffage du local et du circuit d'eau sanitaire 54 à une installation d'eau sanitaire du local. Une telle platine de raccordement 124 est visible sur les figures 8, 9, 11 et 12. En particulier, les raccords de départ 92 et de retour 96 d'eau sanitaire sont montés sur la platine de raccordement 124 pour raccorder le circuit d'eau sanitaire 54 à l'installation d'eau sanitaire du local. Les raccords de départ 106 et de retour 102 d'eau de chauffage sont montés sur la platine de raccordement 124 pour raccorder le circuit d'eau de chauffage 56 à l'installation d'eau de chauffage du local. Ainsi l'ensemble des raccords des circuits d'eau sanitaire 54 et d'eau de chauffage 56 sont disposés au niveau d'une même interface. Le raccordement du dispositif combiné 50 aux installations d'eau de chauffage et d'eau sanitaire du local est ainsi facilité pour l'installateur. La platine de raccordement 124 permet de connaître préalablement à la mise en place du dispositif combiné 50 la position de chacun des raccords. Ceci est particulièrement utile lorsque le dispositif combiné 50 est destiné à être installé dans une construction neuve car la mise en place des installations d'eau de chauffage et d'eau sanitaire du local peut être réalisée avant la mise en place dispositif combiné 50. La platine de raccordement 124 permet donc une grande flexibilité de mise en place de ces installations ainsi que du dispositif combiné 50.

De plus, le regroupement des raccords sur la platine de raccordement 124 permet l'utilisation de beaucoup de composants déjà utilisés pour les chaudières murales ce qui permet de réduire le coût de fabrication du dispositif combiné 50.

La platine de raccordement 124 est de préférence disposée en-dessous du ballon de stockage 52 pour en améliorer son accessibilité, notamment à un installateur. La platine de raccordement 124 est de préférence disposée à l'arrière du dispositif combiné 52. Cette position en arrière de la platine de raccordement 124 permet de pouvoir la fixer à un support. La platine de raccordement 124 peut être disposée au niveau et/ou sous les moyens de fixation 110.

Le platine de raccordement 124 est de préférence formée par une plaque allongée comportant une pluralité d'orifices aptes à recevoir une pluralité de raccords. La platine de raccordement 124 peut également comporter des moyens de fixation dédiés 126 pour permettre la fixation de la platine de raccordement au support 112 ou à tout autre support.

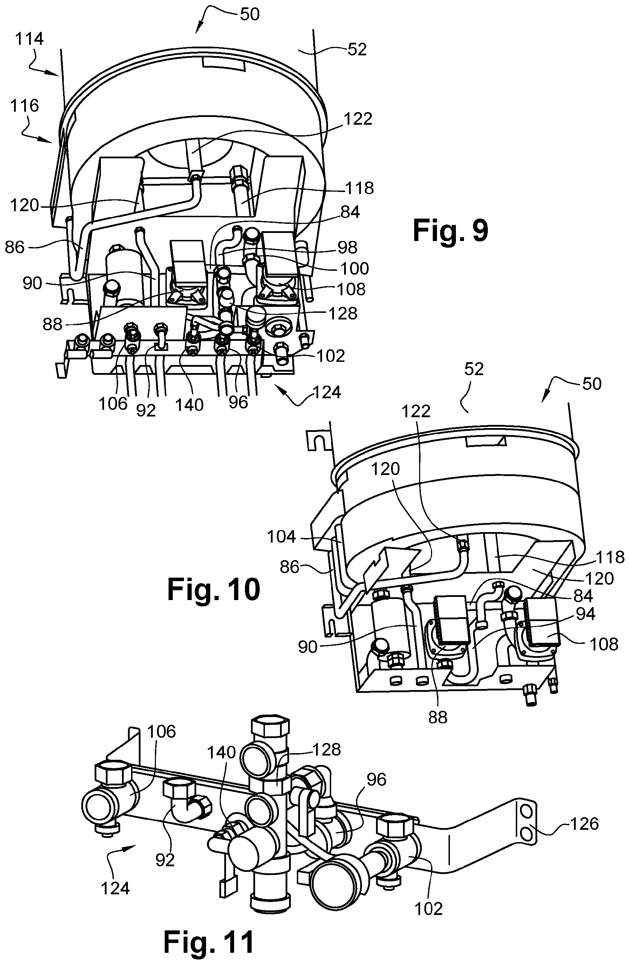

Tel que représenté sur les figures 9, 11 et 12, le dispositif combiné 50 peut également comprendre un raccord de sécurité 129 configuré pour relier le circuit d'eau sanitaire 54 à un groupe de sécurité 128. En particulier, le groupe de sécurité 128 est raccordé entre le raccord en Té 98 et le raccord de retour d'eau sanitaire 96.

Ce groupe de sécurité permet de réguler la pression à l'intérieur du ballon de stockage 52. Selon la réglementation en vigueur (NF DTU 60 - Plomberie), un groupe de sécurité doit être installé sur l'arrivée d'eau froide (ou conduite de retour d'eau sanitaire) d'un ballon de stockage d'eau sanitaire. Le groupe de sécurité implique une mise en place souvent laborieuse et peut être très encombrant en sus du volume occupé par le dispositif combiné 50. La simplification de son installation est donc un bénéfice important pour son installateur. La mise en place de ce groupe de sécurité est ici simplifiée par la présence du raccord de sécurité 129 permettant le montage d'un groupe de sécurité 128 selon les besoins de l'utilisateur.

Le dispositif combiné 50 peut être configuré pour être raccordé à un kit de chauffage multizone permettant de raccorder le dispositif combiné 50 à plusieurs circuits d'eau de chauffage. Un tel kit de chauffage multizone 136 est représenté sur la figure 12. Ce kit de chauffage multizone 136 permet de réguler sélectivement la température dans plusieurs zones du local, notamment dans deux zones distinctes. Le kit de chauffage multizone 136 peut être installé initialement, i.e. de série, ou ultérieurement sous forme d'accessoire sur le dispositif combiné 50. Pour permettre l'installation de ce kit de chauffage multizone 136, le dispositif combiné 50 peut comprendre un raccord supplémentaire de départ 132 et un raccord supplémentaire de retour 134 d'eau de chauffage disposés sur la platine de raccordement 124. Ces raccords supplémentaires de départ 132 et de retour 134 d'eau de chauffage permet de faciliter l'installation d'un kit de chauffage multizone 136 et d'éviter à l'utilisateur d'ajouter un dispositif complémentaire dont l'installation est souvent difficile car le raccordement au dispositif combiné 50 n'est pas spécifiquement prévu. Un espace est prévu entre le ballon de stockage 52 et la platine de raccordement pour recevoir le kit de chauffage multizone 136. Le fait de permettre l'intégration du kit de chauffage multizone 136 au dispositif combiné 50 permet d'éviter l'utilisation d'un boîtier spécifique au kit de chauffage multizone 136 et donc d'en réduire le coût.

Le dispositif combiné 50 peut également comprendre un disconnecteur 140 pour remplir le circuit d'eau de chauffage 56 avec de l'eau provenant du réseau de distribution d'eau de ville au moment de la mise en service, tout en empêchant l'eau du circuit d'eau de chauffage 56 de pénétrer dans ce réseau de distribution.. Le disconnecteur 140 est disposé entre la conduite de retour d'eau de chauffage 100 et la deuxième conduite de retour 94. En particulier, le disconnecteur 140 est de préférence disposé entre le raccord de retour d'eau de chauffage 102 et le raccord de retour d'eau sanitaire 96. De manière encore préférée, le disconnecteur est monté sur la platine de raccordement 124 au même niveau que les autres raccords pour en améliorer son accessibilité.

Pour faciliter sa mise en place, le dispositif combiné 50 peut être avantageusement structuré de manière modulaire. En d'autres termes, le dispositif combiné 50 peut être structurellement divisé en sous-ensembles prédéfinis. De préférence, les sous-ensembles ou modules ont une masse inférieure à ou égale à 55kg lorsqu'ils sont vides d'eau, de préférence inférieure ou égale à 50kg, de manière encore préférée inférieure ou égale à 45kg. Cette structure modulaire permet de répartir avantageusement la masse du dispositif combiné 50 en plusieurs modules interconnectables. Cette répartition est réalisée de préférence de manière à ce qu'un installateur puisse porter et manoeuvrer seul chacun des modules.

Tel que représenté sur les figures 8 à 10, en configuration modulaire, le dispositif combiné 50 comprend un premier module 114 comportant le ballon de stockage 52 d'eau sanitaire et un deuxième module 116 comportant l'échangeur de chaleur 58, les circuits d'eau de chauffage 56 et d'eau sanitaire 54 ainsi que la platine de raccordement 124. En configuration modulaire, les moyens de fixation 110 sont de préférence configurés pour fixer au support 112 les premier 114 et deuxième 116 modules indépendamment l'un de l'autre. Ainsi, les moyens de fixation 110 peuvent comprendre des premiers moyens de fixation du premier module 114 au support 112 et des deuxièmes moyens de fixation du deuxième module 116 au support 112.

Un procédé de montage du dispositif combiné 50 est également proposé. Ce procédé comprend la fixation du premier module 114 sur le support 112 de manière à suspendre le premier module 114 au-dessus du sol. Les premier 114 et deuxième 116 modules sont ensuite positionnés l'un par rapport à l'autre. Le procédé comprend également la fixation du deuxième module 116 sur le support 112 de manière à suspendre au-dessus du sol le deuxième module 116. Dans cette deuxième étape de fixation, le deuxième module 116 peut être alternativement fixé uniquement au premier module 114 de manière à être suspendu au-dessus du sol. Dans ce dernier cas, le poids du deuxième module 116 est repris en tout ou partie par le premier module 114.

De manière encore alternative, le procédé de montage peut être débuté par la fixation du deuxième module 116. Les premier 114 et deuxième 116 modules sont ensuite positionnés l'un par rapport à l'autre. Enfin, le premier module 114 est fixé sur le support 112 de manière à suspendre au-dessus du sol le premier module 114. Dans cette deuxième étape de fixation, le premier module 114 peut être alternativement fixé uniquement au deuxième module 116 de manière à reposer sur le deuxième module 116. Dans ce dernier cas, le poids du premier module 114 est repris en tout ou partie par le deuxième module 116.

Il est également proposé un système de chauffage de l'eau sanitaire et de l'eau de chauffage d'un local comprenant le dispositif combiné 50. Le système de chauffage comprend également au moins une installation d'eau sanitaire comportant au moins un point de puisage et au moins une installation d'eau de chauffage comprenant au moins un système d'émission de chaleur pour chauffer le local. Lesdites au moins une installation d'eau sanitaire et au moins une installation d'eau de chauffage sont reliées respectivement au circuit d'eau sanitaire 54 et au circuit d'eau de chauffage 56 du dispositif combiné 50.

## Revendications

1. Dispositif combiné (50) de chauffage de l'eau sanitaire et de l'eau de chauffage d'un local, ledit dispositif combiné (50) comprenant :
- un ballon de stockage (52) d'eau sanitaire,
- un circuit d'eau sanitaire (54) en communication de fluide avec le ballon de stockage (52),
- un circuit d'eau de chauffage (56),
- un échangeur de chaleur (58) d'une pompe à chaleur dans lequel un fluide caloporteur est apte à circuler, l'échangeur de chaleur (58) étant configuré pour effectuer un échange de chaleur :
• entre le fluide caloporteur et de l'eau sanitaire présente dans le circuit d'eau sanitaire (54), et
• entre le fluide caloporteur et de l'eau de chauffage présente dans le circuit d'eau de chauffage (56)
l'échangeur de chaleur (58) comportant trois conduites (64, 66, 68) imbriquées les unes à l'intérieur des autres pour définir trois zones d'écoulement (70, 72, 74) de fluide,
lesdites trois conduites (64, 66, 68) comprenant une première (64), une deuxième (66) et une troisième (68) conduites formant :
- une première zone d'écoulement (70) à l'intérieur de la première conduite (64),
- une deuxième zone d'écoulement (72) de section annulaire disposée entre la première conduite (64) et la deuxième conduite (66), et
- une troisième zone d'écoulement (74) de section annulaire disposée entre la deuxième conduite (66) et la troisième conduite (68),
dans lequel la deuxième zone d'écoulement (72) est configurée pour transporter le fluide caloporteur et chacune des première (70) et troisième (74) zones d'écoulement est configurée pour transporter l'un parmi l'eau chaude sanitaire et l'eau de chauffage,
**caractérisé en ce que** la paroi (67) de la conduite séparant l'eau sanitaire du fluide caloporteur est une double paroi.

2. Dispositif combiné (50) selon la revendication 1, dans lequel l'échangeur de chaleur (58) est disposé en dehors du ballon de stockage (52) d'eau sanitaire.

3. Dispositif combiné (50) selon la revendication 1 ou 2, dans lequel les trois conduites (64, 66, 68) de l'échangeur de chaleur (58) sont concentriques.

4. Dispositif combiné (50) selon l'une des revendications 1 à 3, dans lequel chacune des trois conduites (64, 66, 68) s'étend le long d'une trajectoire (A) hélicoïdale commune aux trois conduites.

5. Dispositif combiné (50) selon l'une quelconque des revendications précédentes, dans lequel une cavité de fuite est formée à l'intérieur de la double paroi, la cavité de fuite étant en communication de fluide avec l'extérieur de l'échangeur de chaleur (58) pour permettre à un fluide de s'échapper hors de l'échangeur de chaleur (58) en cas d'endommagement de l'une des parois de la double paroi.

6. Dispositif combiné (50) selon la revendication 5, dans lequel la cavité de fuite comprend une pluralité de canaux s'étendant le long des trois conduites (64, 66, 68).

7. Dispositif combiné (50) selon l'une des revendications précédentes, dans lequel la première conduite (64) comporte une surface interne lisse.

8. Dispositif combiné (50) selon l'une quelconque des revendications précédentes, dans lequel le circuit d'eau sanitaire (54) comprend :
- un premier circuit d'eau sanitaire (80) comprenant une première conduite de départ (84) reliant le ballon de stockage (52) à une entrée d'eau sanitaire de l'échangeur de chaleur (58) et une première conduite de retour (86) reliant une sortie d'eau sanitaire de l'échangeur de chaleur (58) au ballon de stockage (52),
- un deuxième circuit d'eau sanitaire (82) comprenant une deuxième conduite de départ (90) reliant le ballon de stockage à un raccord de départ d'eau sanitaire (92) configuré pour être raccordé à une installation d'eau sanitaire et une deuxième conduite de retour (94) reliée à un raccord de retour d'eau sanitaire (96) configuré pour être raccordé à une installation d'eau sanitaire.

9. Dispositif combiné (50) selon la revendication 8, dans lequel la deuxième conduite de retour (94) est raccordée à la première conduite de départ (84) au moyen d'un raccord en Té (98).

10. Dispositif combiné (50) selon l'une quelconque des revendications précédentes, comprenant en outre une platine de raccordement (124) du circuit d'eau de chauffage (56) à une installation d'eau de chauffage du local et du circuit d'eau sanitaire (54) à une installation d'eau sanitaire du local.

11. Dispositif combiné (50) selon la revendication 8 en combinaison avec la revendication 10, dans lequel les raccords de départ (92) et de retour (96) d'eau sanitaire sont montés sur la platine de raccordement (124), le dispositif combiné (50) comportant en outre au moins un raccord de départ (106) et au moins un raccord de retour (102) d'eau de chauffage montés sur la platine de raccordement (124) pour relier le circuit d'eau de chauffage (56) à ladite installation d'eau de chauffage du local.

12. Dispositif combiné (50) selon la revendication 11, comprenant une pluralité de raccord de départ d'eau de chauffage (106, 132) et une pluralité de raccord de retour d'eau de chauffage (102, 134) reliés au circuit d'eau de chauffage (56) pour permettre le raccordement de plusieurs installations d'eau de chauffage.

13. Dispositif combiné (50) selon l'une quelconque des revendications précédentes, comprenant également un raccord de sécurité (129) reliant le circuit d'eau sanitaire (54) à un groupe de sécurité (128) permettant de réguler la pression à l'intérieur du ballon de stockage (52), le groupe de sécurité (128) étant disposé sous le ballon de stockage (52).

14. Dispositif combiné (50) selon l'une quelconque des revendications précédentes, dans lequel l'échangeur de chaleur (58) est disposé au-dessous du ballon de stockage (52) ou s'étend autour du ballon de stockage (52).

15. Système de chauffage de l'eau sanitaire et de l'eau de chauffage d'un local, comprenant :
- un dispositif combiné (50) selon l'une quelconque des revendications précédentes,
- au moins une installation d'eau sanitaire comportant au moins un point de puisage et au moins une installation d'eau de chauffage comprenant au moins un système d'émission de chaleur pour chauffer le local, reliées respectivement au circuit d'eau sanitaire (54) et au circuit d'eau de chauffage (56) du dispositif combiné (50).

## Patentansprüche

1. Kombigerät (50) zum Erhitzen von Brauchwasser und Heizwasser eines Raums, wobei das Kombigerät (50) Folgendes umfasst:
- einen Speicherbehälter (52) von Brauchwasser,
- einen Brauchwasserkreislauf (54) in fluidischer Kommunikation mit dem Speicherbehälter (52),
- einen Heizwasserkreislauf (56),
- einen Wärmetauscher (58) einer Wärmepumpe, in dem eine Wärmeträgerflüssigkeit ausgelegt ist, um zu zirkulieren, wobei der Wärmetauscher (58) konfiguriert ist, um einen Wärmetausch durchzuführen:
- zwischen der Wärmeträgerflüssigkeit und dem Brauchwasser, das im Brauchwasserkreislauf (54) vorhanden ist, und
- zwischen der Wärmeträgerflüssigkeit und dem Heizwasser, das im Heizwasserkreislauf (56) vorhanden ist,
wobei der Wärmetauscher (58) drei Leitungen (64, 66, 68) umfasst, die ineinandergeschoben sind, um drei Abflussbereiche (70, 72, 74) von Fluid zu definieren,
wobei die drei Leitungen (64, 66, 68) eine erste (64), eine zweite (66) und eine dritte (68) Leitung umfassen, die Folgendes bilden:
- einen ersten Abflussbereich (70) im Inneren der ersten Leitung (64),
- einen zweiten Abflussbereich (72) mit ringförmigem Schnitt, der zwischen der ersten Leitung (64) und der zweiten Leitung (66) angeordnet ist, und
- einen dritten Abflussbereich (74) mit ringförmigem Schnitt, der zwischen der zweiten Leitung (66) und der dritten Leitung (68) angeordnet ist,
wobei der zweite Abflussbereich (72) konfiguriert ist, um die Wärmeträgerflüssigkeit zu transportieren, und jeder des ersten (70) und dritten (74) Abflussbereichs konfiguriert ist, um eines vom Brauchwarmwasser und Heizwasser zu transportieren,
**dadurch gekennzeichnet, dass** die Wand (67) der Leitung, die das Brauchwasser von der Wärmeträgerflüssigkeit trennt, eine doppelte Wand ist.

2. Kombigerät (50) nach Anspruch 1, wobei der Wärmetauscher (58) außerhalb des Speicherbehälters (52) von Brauchwasser angeordnet ist.

3. Kombigerät (50) nach Anspruch 1 oder 2, wobei die drei Leitungen (64, 66, 68) des Wärmetauschers (58) konzentrisch sind.

4. Kombigerät (50) nach einem der Ansprüche 1 bis 3, wobei sich jede der drei Leitungen (64, 66, 68) entlang einer schraubenförmigen Bahn (A) erstreckt, die den drei Leitungen gemeinsam ist.

5. Kombigerät (40, 50) nach einem der vorhergehenden Ansprüche, wobei ein Auslaufhohlraum im Inneren der doppelten Wand gebildet ist, wobei der Auslaufhohlraum in fluidischer Kommunikation mit der Außenseite des Wärmetauschers (58) ist, um einem Fluid zu ermöglichen, im Fall einer Beschädigung einer der Wände der doppelten Wand aus dem Wärmetauscher (58) auszutreten.

6. Kombigerät (50) nach Anspruch 5, wobei der Auslaufhohlraum eine Vielzahl von Kanälen umfasst, die sich entlang der drei Leitungen (64, 66, 68) erstrecken.

7. Kombigerät (50) nach einem der vorhergehenden Ansprüche, wobei die erste Leitung (64) eine glatte innere Fläche umfasst.

8. Kombigerät (50) nach einem der vorhergehenden Ansprüche, wobei der Brauchwasserkreislauf (54) Folgendes umfasst:
- einen ersten Brauchwasserkreislauf (80), umfassend eine erste Ausgangsleitung (84), die den Speicherbehälter (52) mit einem Brauchwassereingang des Wärmetauschers (58) verbindet, und eine erste Rücklaufleitung (86), die einen Brauchwasserausgang des Wärmetauschers (58) mit dem Speicherbehälter (52) verbindet,
- einen zweiten Brauchwasserkreislauf (82), umfassend eine zweite Ausgangsleitung (90), die den Speicherbehälter mit einer Ausgangsverbindung von Brauchwasser (92) verbindet, die konfiguriert ist, um mit einer Brauchwasseranlage verbunden zu werden, und eine zweite Rücklaufleitung (94), die mit einer Rücklaufverbindung von Brauchwasser (96) verbunden ist, die konfiguriert ist, um mit einer Brauchwasseranlage verbunden zu sein.

9. Kombigerät (50) nach Anspruch 8, wobei die zweite Rücklaufleitung (94) mit der ersten Ausgangsleitung (84) mit Hilfe einer T-förmigen Verbindung (98) verbunden ist.

10. Kombigerät 50) nach einem der vorhergehenden Ansprüche, umfassend außerdem eine Platine zur Verbindung (124) des Heizwasserkreislaufs (56) mit einer Heizwasseranlage des Raums und des Brauchwasserkreislaufs (54) mit einer Brauchwasseranlage des Raums.

11. Kombigerät (50) nach Anspruch 8 in Kombination mit Anspruch 10, wobei die Ausgangs- (92) und Rücklaufverbindungen (96) von Brauchwasser auf der Verbindungplatine (124) montiert sind, wobei das Kombigerät (50) außerdem mindestens eine Ausgangsverbindung (106) und mindestens eine Rücklaufverbindung (102) von Heizwasser umfasst, die auf der Verbindungplatine (124) montiert sind, um den Heizwasserkreislauf (56) mit der Heizwasseranlage des Raums zu verbinden.

12. Kombigerät (50) nach Anspruch 11, umfassend eine Vielzahl von Ausgangsverbindungen von Heizwasser (106, 132) und eine Vielzahl von Rücklaufverbindungen von Heizwasser (102, 134), die mit dem Heizwasserkreislauf (56) verbunden sind, um die Verbindung von mehreren Heizwasseranlagen zu ermöglichen.

13. Kombigerät (50) nach einem der vorhergehenden Ansprüche, umfassend auch eine Sicherheitsverbindung (129), die den Brauchwasserkreislauf (54) mit einer Sicherheitsgruppe (128) verbindet, die ermöglicht, den Druck im Inneren des Speicherbehälters (52) zu regulieren, wobei die Sicherheitsgruppe (128) unter dem Speicherbehälter (52) angeordnet ist.

14. Kombigerät (50) nach einem der vorhergehenden Ansprüche, wobei der Wärmetauscher (58) unter dem Speicherbehälter (52) angeordnet ist oder sich um den Speicherbehälter (52) herum erstreckt.

15. System zum Erhitzen von Brauchwasser und Heizwasser eines Raums, umfassend:
- ein Kombigerät (50) nach einem der vorhergehenden Ansprüche,
- mindestens eine Brauchwasseranlage, umfassend mindestens einen Entnahmepunkt und mindestens einer Heizwasseranlage, umfassend mindestens ein System zur Emission von Wärme, um den Raum zu heizen, die jeweils mit dem Brauchwasserkreislauf (54) und mit dem Heizwasserkreislauf (56) des Kombigeräts (50) verbunden sind.

## Claims

1. A combined device (50) for heating domestic water and water for heating a room, said combined device (50) comprising:
- a storage tank (52) for domestic water,
- a domestic water circuit (54) in fluid communication with the storage tank (52),
- a heating water circuit (56),
- a heat exchanger (58) for a heat pump in which a heat transfer fluid is able to circulate, the heat exchanger (58) being configured to perform a heat exchange:
• between the heat transfer fluid and the domestic water present in the domestic water circuit (54), and
• between the heat transfer fluid and the heating water present in the heating water circuit (56)
the heat exchanger (58) including three pipes (64, 66, 68) interleaved with one another to define three fluid flow areas (70, 72, 74),
said three pipes (64, 66, 68) comprising a first (64), a second (66) and a third (68) pipe forming:
- a first flow area (70) inside the first pipe (64),
- a second flow area (72) of annular section arranged between the first pipe (64) and the second pipe (66), and
- a third flow area (74) of annular section arranged between the second pipe (66) and the third pipe (68),
in which the second flow area (72) is configured to transport the heat transfer fluid and each of the first (70) and third (74) flow areas is configured to transport one among the domestic hot water and the heating water,
**characterized in that** the wall (67) of the pipe separating the domestic water from the heat transfer fluid is a double wall.

2. The combined device (50) according to claim 1, wherein the heat exchanger (58) is arranged outside the domestic water storage tank (52).

3. The combined device (50) according to claim 1 or 2, wherein the three pipes (64, 66, 68) of the heat exchanger (58) are concentric.

4. The combined device (50) according to one of claims 1 to 3, wherein each of the three pipes (64, 66, 68) extends along a helical trajectory (A) common to the three pipes.

5. The combined device (50) according to any one of the preceding claims, wherein a leakage cavity is formed inside the double wall, the leakage cavity being in fluid communication with the outside of the heat exchanger (58) to allow a fluid to escape outside the heat exchanger (58) in case of damage to one of the walls of the double wall.

6. The combined device (50) according to claim 5, wherein the leakage cavity comprises a plurality of channels extending along the three pipes (64, 66, 68).

7. The combined device (50) according to one of the preceding claims, wherein the first pipe (64) includes a smooth inner surface.

8. The combined device (50) according to any one of the preceding claims, wherein the domestic water circuit (54) comprises:
- a first domestic water circuit (80) comprising a first outlet pipe (84) connecting the storage tank (52) to a domestic water inlet of the heat exchanger (58) and a first return pipe (86) connecting a domestic water outlet of the heat exchanger (58) to the storage tank (52),
- a second domestic water circuit (82) comprising a second outlet pipe (90) connecting the storage tank to a domestic water outlet coupling (92) configured to be coupled to a domestic water installation and a second return pipe (94) connected to a domestic water return coupling (96) configured to be coupled to a domestic water installation.

9. The combined device (50) according to claim 8, wherein the second return pipe (94) is coupled to the first outlet pipe (84) using a T coupling (98).

10. The combined device (50) according to any one of the preceding claims, further comprising a coupling plate (124) for coupling the heating water circuit (56) to a heating water installation of the room and for coupling the domestic water circuit (54) to a domestic water installation of the room.

11. The combined device (50) according to claim 8 combined with claim 10, wherein the domestic water outlet coupling (92) and domestic water return coupling (96) are mounted on the coupling plate (124), the combined device (50) further including at least one heating water outlet coupling (106) and at least one heating water return coupling (102) that are mounted on the coupling plate (124) in order to connect the heating water circuit (56) to said heating water installation of the room.

12. The combined device (50) according to claim 11, comprising a plurality of heating water outlet couplings (106, 132) and a plurality of heating water return couplings (102, 134) connected to the heating water circuit (56) to allow the connection of several heating water installations.

13. The combined device (50) according to any one of the preceding claims, also comprising a safety coupling (129) connecting the domestic water circuit (54) to a safety unit (128) allowing the pressure to be regulated inside the storage tank (52), the safety unit (128) being arranged below the storage tank (52).

14. The combined device (50) according to any one of the preceding claims, wherein the heat exchanger (58) is arranged below the storage tank (52) or extends around the storage tank (52).

15. A system for heating domestic water and water for heating a room, comprising:
- a combined device (50) according to any one of the preceding claims,
- at least one domestic water installation including at least one supply point and at least one heating water installation comprising at least one heat emission point to heat the room, connected to the domestic water circuit (54) and to the heating water circuit (56) of the combined device (50), respectively.
